# EUROPÄISCHE PATENTSCHRIFT

(11) **EP 0 459 466 B1**
(45) Veröffentlichungstag und Bekanntmachung des Hinweises auf die Patenterteilung: **06.10.1993**
(21) Anmeldenummer: 91108829.2
(22) Anmeldetag: 29.05.1991
(51) Int. Cl.: F01L 1/04, F16H 53/02, F02M 59/10

(54) **Nockenwelle**
Camshaft
Arbre à cames

(30) Priorität: 29.05.1990 DE 4017239
(43) Veröffentlichungstag der Anmeldung: 04.12.1991
(73) Patentinhaber: DEUTZ Aktiengesellschaft, 51063 Köln (DE)
(72) Erfinder: Nolte, Albert, W-5000 Köln 30 (DE); Lache, Karl Theo, W-5828 Ennepetal (DE)

(56) Entgegenhaltungen:
- CH-A- 583 372
- DE-C- 655 953
- FR-A- 2 444 811
- PATENT ABSTRACTS OF JAPAN vol. 9, no. 3 (M-349)(1726) 09 Januar 1985, & JP-A-59 155660 (NISSAN) 04 September 1984,
- DERREUMAUX: "MOTEURS A ESSENCE" Band 2, Juni 1988, E.T.A.I., BOULOGNE BILLANCOURT (FRANCE)

## Beschreibung

Die Erfindung betrifft eine Nockenwelle mit mindestens zwei Lagerscheiben und mindestens zwei Nocken, wobei die Lagerscheiben einen bestimmten Abstand aufweisen und die Nocken zwischen den Lagerscheiben angeordnet sind, wobei die Nocken und die Lagerscheiben miteinander einstückig hergestellt sind.

Nockenwellen dienen bei Brennkraftmaschinen unter anderem zur Betätigung von Gaswechselventilen und Einspritzpumpenplungern. Insbesondere bei Anwendung hoher Motordrehzahlen und hoher Einspritzdrücke werden besonders steife Nockenwellen benötigt, um eine exakte Ventilsteuerung und einen exakten Einspritzverlauf zu realisieren.

In der DE-oS 32 24 762 wird eine Nockenwelle für Reiheneinspritzpumpen für Brennkraftmaschinen mit jeweils einer Hauptlagerstelle an den beiden Enden der Nockenwelle beschrieben, bei der die üblichen Zwischenräume zwischen den einzelnen Nocken bzw. zwischen Nocken und Hauptlagerstelle durch Verstärkungen ausgefüllt sind, die die Steifheit der Nockenwelle erhöhen. Die Verstärkungen können als Verstärkungsscheiben ausgebildet sein oder als der Nockenkontur folgende Verstärkungsansätze. Zwischen den Verstärkungsscheiben und den einzelnen Nocken bzw. zwischen den Verstärkungsansätzen der einzelnen Nocken sind schmale Einstiche auf einen Durchmesser, der kleiner als der Grundkreis des jeweiligen Nockens ist, vorgesehen.

Diese Einstiche bedeuten eine Schwächung der Nockenwelle und einen zusätzlichen Bearbeitungsaufwand.

Der Erfindung liegt die Aufgabe zugrunde, eine Nockenwelle zur Betätigung von Gaswechselventilen und/oder Einspritzpumpenplungern zu schaffen, die sich durch große Steifheit und durch geringen Bearbeitungsaufwand auszeichnet.

Die Aufgabe wird gelöst dadurch, daß bei einer gattungsgemäßen Nockenwelle, die Nocken unmittelbar aneinander bzw. an die Lagerscheiben stoßen und damit den Bereich zwischen den Lagerscheiben in axialer Richtung der Nockenwelle so vollständig ausfüllen, daß nur den Nockenkonturen folgende Übergänge ohne zylindrische Abschnitte und ohne Einsticke zwischen den Nocken und den Lagerscheiben vorgesehen sind. Auf diese Weise ist eine maximal mögliche Steifheit der Nockenwelle mit einem geringen Bearbeitungsaufwand verbunden, da erfindungsgemäß die Einstiche zwischen den einzelnen Nocken fortfallen.

Bei der spanabhebenden Bearbeitung der Nocken, die vorteilhafterweise vorgegossen oder vorgeschmiedet sind oder aber aus einer vollen Welle herausgearbeitet werden, besteht des Problem, daß zwischen den einzelnen bearbeiteten Nocken ein Bearbeitungsgrat stehen bleibt, der unter anderem Verletzungsgefahr min sich bringt. Durch eine vorteilhafte Weiterbildung der Erfindung wird dieser Bearbeitungsgrat vermieden, ohne einen dazu erforderlichen Freistich zu benötigen. Die Überlappung der Bearbeitungsbreiten der einzelnen Nocken vermeidet die Bildung eines Bearbeitungsgrates, wobei gleichzeitig eine größtmögliche Steifigkeit der Nockenwelle mit geringem Bearbeitungsaufwand verwirklicht wird.

Der Bearbeitungsaufwand wird erfindungsgemäß durch Verwendung gleicher Werkzeuge für alle Nocken weiter verringert.

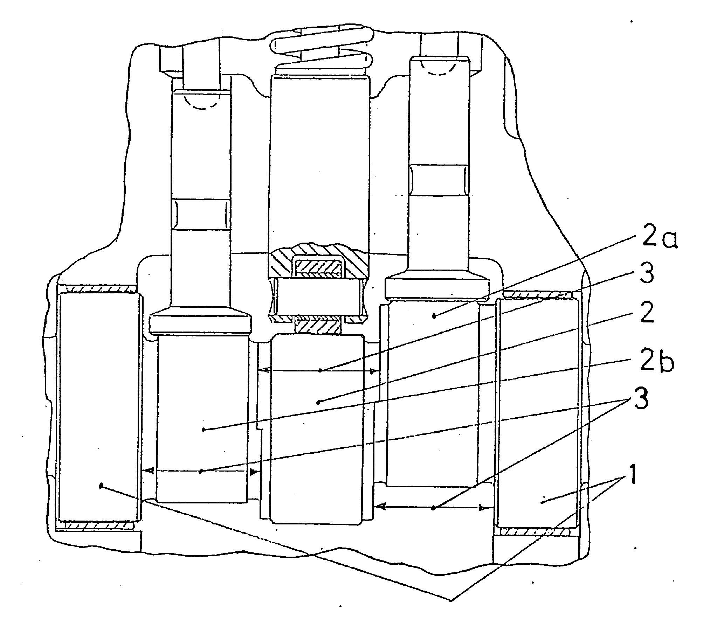

Weitere Merkmale der Erfindung gehen aus der anschließenden Beschreibung hervor und der Zeichnung, in der ein Ausführungsbeispiel schematisch dargestellt ist.

Die Zeichnung zeigt:
eine Teilansicht der erfindungsgemäßen Nockenwelle mit zwei Lagerstellen und dazwischenliegenden Nokken für zwei Gaswechselventile und einen Einspritzpumpenplunger.

Der dargestellte Nockenwellenteil ist einer Zylindereinheit zugeordnet. Er besteht aus zwei Lagerscheiben 1 zwischen denen ein Einspritzpumpennocken 2 und zwei Gaswechselventilnocken 2a, 2b angeordnet sind. Die Breite der Gaswechselventilnocken ist durch die Stößelkonstrukion bedingt, die Breite des Einspritzpumpennockens durch die Höhe des Einspritzdruckes und die daraus folgende Rollenbreite. Aufgrund des relativ geringen Abstandes zwischen den Lagerscheiben 1 und der vorgegebenen Breite der Nocken 2, 2a, 2b stoßen diese unmittelbar aneinander, bzw. an die Lagerscheiben 1.

Um bei der spanabhebenden Bearbeitung der Hocken eine Gratbildung zwischen den einzelnen Nocken zu vermeiden, ist die Bearbeitungsbreite 4 der einzelnen Nocken größer als die Breite der jeweiligen Nocken gewählt. Durch die Überlappung der Bearbeitungsbreiten benachbarter Nocken wird eine Gratbildung vermieden. Dadurch erübrigt sich ein gesondertes Einstechen zwischen den einzelnen Nocken, bzw. zwischen Nocken und Lagerscheiben, was die Steifheit der Nockenwelle erhöht und deren Bearbeitung vereinfacht. Eine weitere Vereinfachung der Bearbeitung ergibt sich aus der gleichen Bearbeitungsbreite 4 für alle drei Nocken, die ein einheitliches Werkzeug für alle Nocken möglich macht, wobei das Werkzeug entsprechend der unterschiedlichen Nokkenkontur der einzelnen Nocken unterschiedlich geführt wird.

## Patentansprüche

1. Nockenwelle mit mindestens zwei Lagerscheiben (1), und mindestens zwei Nocken (2, 2a, 2b) wobei die Lagerscheiben (1) einen bestimmten Abstand aufweisen und die Nocken (2, 2a, 2b) zwischen den Lagerscheiben (1) angeordnet sind, wobei die Nocken (2,2a,2b) und die Lagerscheiben (1) miteinander einstückig hergestellt sind,
*dadurch gekennzeichnet,* daß die Nocken (2, 2a, 2b) unmittelbar aneinander bzw. an die Lagerscheiben (1) stoßen und damit den Bereich zwischen den Lagerscheiben (1) in axialer Richtung der Nockenwelle so vollständig ausfüllen, daß nur den Nockenkonturen folgende Übergänge ohne zylindrische Abschnitte und ohne Einstiche zwischen den Nocken und den Lagerscheiben (1) vorgesehen sind.

2. Nockenwelle nach Anspruch 1,
*dadurch gekennzeichnet,* daß die Nockenwelle vorgegossen oder vorgeschmiedet ist, wobei die einzelnen Nocken (2, 2a, 2b) und die Lagerscheiben (1) eine für eine spanabhebende Bearbeitung erforderliche Bearbeitungszugabe aufweisen.

3. Nockenwelle nach Anspruch 1,
*dadurch gekennzeichnet,* daß die Nocken (2, 2a, 2b) aus einem zylindrischen Rohling mit mindestens dem Durchmesser der Lagerscheiben (1) durch spanabhebende Bearbeitung herausgearbeitet werden.

4. Nockenwelle nach einem der vorangegangenen Ansprüche, *dadurch gekennzeichnet,* daß den Nocken (2, 2a, 2b) eine bestimmte Bearbeitungsbreite zugeordnetist und daß die Bearbeitungsbreiten (4) benachbarter Nocken sich überlappen.

5. Nockenwelle nach Anspruch 4, *dadurch* *gekennzeichnet,* daß die Bearbeitungsbreiten (4) sämtlicher Nocken (2, 2a, 2b) gleich groß sind.

## Claims

1. A camshaft comprising at least two bearing discs (1) and at least two cams (2, 2a, 2b), the bearing discs (1) having a given spacing and the cams (2, 2a, 2b) being disposed between the bearing discs (1), the cams (2, 2a, 2b) and the bearing discs (1) being manufactured together in one piece, characterised in that the cams (2, 2a, 2b) are immediately adjacent or abut the bearing discs (1) and consequently fill the space between the bearing discs (1), in the axial direction of the camshaft, so completely that only transitions following the cam contours are provided, without cylindrical portions and without recesses between the cams and the bearing discs (1).

2. A camshaft according to claim 1, characterised in that the camshaft is precast or pre-forged, the individual cams (2, 2a, 2b) and the bearing discs (1) being given the oversize necessary for machining.

3. A camshaft according to claim 1, characterised in that the cams (2, 2a, 2b) are machined from a cylindrical blank at least equal in diameter to the bearing discs (1).

4. A camshaft according to any of the preceding claims, characterised in that the cams (2, 2a, 2b) are assigned a given machining width and the machining widths (4) of adjacent cams overlap.

5. A camshaft according to claim 4, characterised in that the machining widths (4) of all the cams (2, 2a, 2b) are equal.

## Revendications

1. Arbre à cames avec au moins deux portées de paliers (1) et au moins deux cames (2, 2a, 2b) dans lesquelles les portées de paliers (1) ont entre elles une distance déterminée et dans lesquelles les cames (2, 2a, 2b) sont disposées entre les portées de paliers (1), tandis que les cames (2, 2a, 2b) et les portées de paliers (1) sont réalisées ensemble d'un seul tenant, arbre à cames caractérisé en ce que les cames (2, 2a, 2b) butent directement les unes contre les autres ou bien contre les portées de paliers (1) et remplissent ainsi la zone entre les portées de paliers (1) en direction axiale de l'arbre à cames si complètement que seules sont prévues entre les cames et les portées de paliers (1) les transitions suivant les contours des cames sans tronçons cylindriques ni encoches.

2. Arbre à cames selon la revendication 1, caractérisé en ce que cet arbre à cames est préalablement moulé ou forgé, tandis que les différentes cames (2, 2a, 2b) et les portées de paliers (1) comportent une surépaisseur d'usinage nécessaire pour un usinage par enlèvement de copeaux.

3. Arbre à cames selon la revendication 1, caractérisé en ce que les cames (2, 2a, 2b) sont réalisées par usinage par enlèvement de copeaux à partir d'une ébauche cylindrique ayant au moins le diamètre des portées de paliers (1).

4. Arbre à cames selon une des précédentes revendications, caractérisé en ce qu'aux cames (2, 2a, 2b) est associée une largeur d'usinage déterminée et en ce que les largeurs d'usinage (3) de cames voisines se chevauchent.

5. Arbre à cames selon la revendication 4, caractérisé en ce que les largeurs d'usinage (3) de toutes les cames (2, 2a, 2b) sont les mêmes.
